# EUROPEAN PATENT APPLICATION

(11) **EP 1 358 942 A1**
(43) Date of publication of application: **05.11.2003**
(21) Application number: 03251423.4
(22) Date of filing: 08.03.2003
(51) Int. Cl.: B03B 9/06, B09B 3/00

(54) **Apparatus and method for the release of toxic compounds from appliances**

(30) Priority: 25.04.2002 GB 0209460
(71) Applicant: Lynch Environmental Solutions Limited, Cumnock, East Ayrshire KA18 1HF (GB)
(72) Inventor: Lynch, Eddie, East Ayrshire KA18 1HF (GB)
(74) Representative: Murnane, Graham John

(57) **Abstract**

An apparatus adapted to release toxic compounds from a medium present in one or more appliances (100). The apparatus comprises: a first chamber (10) for housing the or each appliance (100); agitating means adapted to separate the medium containing the toxic compounds from the or each appliance (100); and heating means for applying heat to the medium to release the toxic compounds.

## Description

The present invention relates to an apparatus and method for the release of toxic compounds from appliances. In particular, but not exclusively, the invention relates to an apparatus and method for releasing toxic compounds, such as chlorofluorocarbons (CFCs) and Hydrofluorocarbons (HFCs), from the foam used in refrigeration appliances.

Refrigerants are used within refrigeration units to absorb and then dissipate heat. In domestic appliances, CFC was a popular choice of refrigerant until the damage that it causes to the environment became known, particularly the damage to the ozone layer and the contribution to global warming. One alternative to CFC is HFC. While this gas does not damage the ozone layer, it does contribution to global warming.

It is therefore necessary to dispose of refrigeration units that have reached the end of their useful life in a manner that does not cause substantial emission of these toxic substances. These older units are more likely to have CFC as the refrigerant. Known apparatus and methods all involve fragmentation of the complete refrigeration units, and also an open foam milling process. Such means of disposal typically result in emissions of around 2.5% of the refrigerant present. Fragmentation does not allow recycling of the housing and components of the refrigeration unit.

Recent European legislation stipulates that these refrigeration units can no longer be disposed of in land fill sites, and so the emissions from the units become more significant.

According to a first aspect of the present invention, there is provided an apparatus adapted to release toxic compounds from a medium present in one or more appliances comprising:
a first chamber for housing the or each appliance;
agitating means adapted to separate the medium containing the toxic compounds from the or each appliance; and
heating means for applying heat to the medium to release the toxic compounds.

Preferably the agitating means comprises a blasting unit adapted to direct blast material at a high velocity towards the appliance. The blast material may be glass, metal filings or sand. Preferably the blasting unit is pneumatically actuated. Preferably the user may adjust the aim of the blast unit so that blast material may be directed at different locations of the appliance.

Alternatively the agitating means comprises at least one compressing plate capable of being moved in a longitudinal direction to contact and then compress the appliance. The compressing plate may be hydraulically actuated. The compressing plate may be further adapted to oscillate in a substantially lateral direction. The heating means may be adapted to heat the or each compressing plate.

Preferably the apparatus includes a mesh supporting member for supporting the or each appliance within the first chamber, and which allows blast material to fall through the mesh. Preferably the apparatus includes an inclined base plate positioned below the mesh supporting member so that blast material falling through the mesh will fall onto the base plate and then tend to move down the slope of the base plate towards a first location within the first chamber. Preferably shaking means is provided to shake the base plate to encourage the blast material to move towards the first location. Preferably the heating means is adapted to heat the base plate.

Preferably a collector is provided proximal to the first location of the first chamber for collecting the blast material. Preferably the base of the collector comprises a mesh filter adapted to allow fragmented blast material to fall through the mesh.

Preferably the apparatus comprises a second chamber and extraction means adapted to transport the medium from the first chamber to the second chamber. Preferably a first inlet of the extraction means is provided proximal to the first location of the first chamber. Preferably a second inlet of the extraction means is provided at a location near to the top of the first chamber. Preferably the second chamber includes air disturbing means adapted to maintain the medium in an airborne condition. Preferably the air disturbing means comprises a cyclo-generator motor.

Preferably the heating means is adapted to heat the second chamber. Preferably the second chamber is heated to a first specified temperature such that the toxic compound is released from the medium for further extraction. Preferably the first specified temperature is approximately 35° Celsius. Alternatively the second chamber is heated to a second specified temperature such that the toxic compound is released from the medium and then destroyed. Preferably the second specified temperature is greater than 280° Celsius.

Preferably the apparatus includes milling means to mill the medium. Preferably the milling means is interposed between the first chamber and the second chamber. Preferably the apparatus includes sorting means to sort the medium from the blast material. Preferably the sorting means is interposed between the first chamber and the second chamber.
Preferably the sorting means comprises a trap such that the heavier blast material falls into the trap, leaving the lighter medium to continue to the second chamber.

Preferably the apparatus includes a third chamber fluidly connected to the second chamber. Preferably a first pump is provided to draw air and toxic compounds from the second chamber to the third chamber. Preferably the first pump is a vacuum pump. Preferably a valve is interposed between the second chamber and the third chamber. Preferably the third chamber is adapted to cool the contents of the chamber. Preferably filter means is interposed between the second chamber and the third chamber. Preferably the filter means comprises a charcoal filter for converting the toxic compound from a vapour to a liquid form.

Preferably a second pump is provided to draw the toxic compound from the third chamber. Preferably the toxic compound is transported to containers for subsequent destruction.

Preferably the apparatus comprises detection means to detect the presence of the toxic compound. Preferably the detection means comprises a first detector provided at the first chamber. Preferably the detection means comprises a second detector provided at the second chamber. Preferably the second detector is adapted to operate the first pump when the presence of the toxic compound is detected. Preferably the second detector is adapted to open the valve when the presence of the toxic compound is detected. Preferably the detection means comprises a third detector provided at the third chamber. Preferably the third detector is adapted to operate the second pump when the presence of the toxic compound is detected.

Preferably the first chamber includes a door for insertion and removal of the or each appliance. Preferably the door is sealed when closed. Preferably safety means are provided to prevent operation of the apparatus if the door is not sealed. Preferably the safety means indicates to the user if the door is not sealed.

Preferably the appliance is a refrigeration unit. Preferably the toxic compound is CFC. Preferably the medium is a polyurethane foam that contains CFC.

According to a second aspect of the present invention there is provided a method of releasing toxic compounds from a medium present in one or more appliances comprising the steps of:
inserting one or more appliances in a chamber;
agitating the or each appliance to separate the medium containing the toxic compounds from the or each appliance; and
applying heat to the medium to release the toxic compounds.

Preferably the step of agitating the appliance comprises directing blast material at a high velocity towards the appliance.

Alternatively the step of agitating the appliance comprises compressing the appliance using a compressing plate moving in a longitudinal direction. The step of agitating the appliance may further comprise oscillating the compressing plate in a substantially lateral direction. Heating the medium may be performed by heating the compressing plate.

Preferably the step of inserting the or each appliance in a chamber includes supporting the or each appliance on a mesh supporting member which allows blast material to fall through the mesh. Preferably the method includes providing an inclined base plate positioned below the mesh supporting member so that blast material falling through the mesh will fall onto the base plate and then move towards a first location within the first chamber. Preferably the method includes shaking the base plate to encourage the blast material to move towards the first location. Preferably the step of applying heat to the medium includes heating the base plate.

Preferably the method comprises extracting the medium from the first chamber to a second chamber. Preferably the step of applying heat to the medium includes heating the second chamber to a first specified temperature such that the toxic compound is released from the medium and may be further extracted. Alternatively the step of applying heat to the medium includes heating the second chamber to a second specified temperature such that the toxic compound is released from the medium and is then destroyed. Preferably the step of applying heat to the medium includes disturbing the air within the chamber to maintain the medium in an airborne condition.

Preferably the step of extracting the medium from the first chamber to a second chamber includes milling the medium. Preferably the step of extracting the medium from the first chamber to a second chamber includes sorting the medium from the blast material.

Preferably the method includes drawing air and toxic compounds from the second chamber to the third chamber which is adapted to cool the contents of the third chamber. Preferably the step of drawing air and toxic compounds from the second chamber to the third chamber includes providing a charcoal filter for converting the toxic compound from a vapour to a liquid form.

Preferably the method includes detecting the presence of the toxic compound.

Preferably the appliance is a refrigeration unit. Preferably the toxic compound is CFC. Preferably the medium is a polyurethane foam that contains CFC.

An embodiment of the present invention will now be described, by way of example only, with reference to the accompanying drawings, in which:
Fig. 1 is a side view of a first chamber of an apparatus according to an embodiment of the invention;
Fig. 2 is a sectional view through the side wall of the chamber of Fig. 1; and
Fig. 3 is a side view of second and third chambers of the apparatus of Fig. 1.

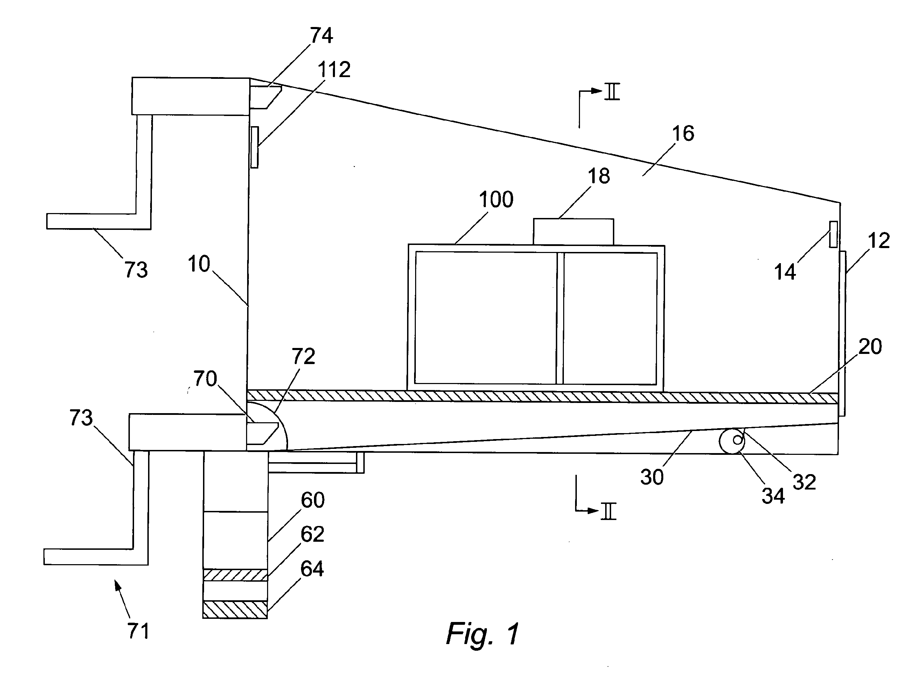

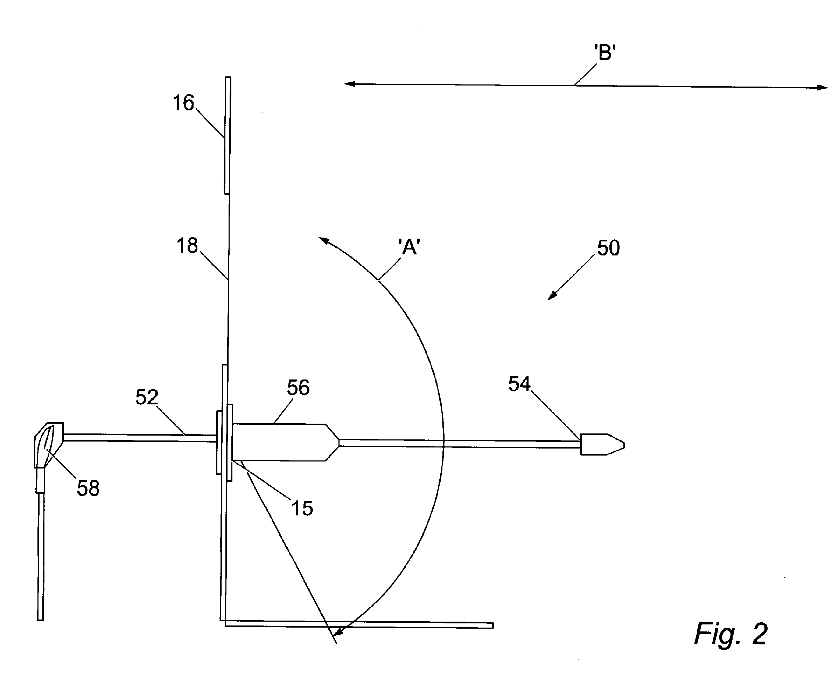

Referring to Figs. 1 and 2, there is shown a first chamber 10 of the apparatus according to the present invention. The chamber 10 has a door 12 for insertion and removal of appliances. The appliance of the present embodiment is a refrigeration unit 100. The chamber 10 is suitably dimensioned to house a number of refrigeration units 100, although only one unit 100 is shown in Fig. 1.

The refrigeration unit 100 is placed on a mesh supporting member 20 which is located at a vertical distance from the base of the first chamber 10. The door 12 of the first chamber 10 is provided with a seal (not shown) so that the chamber 10 is sealed when the door 12 is closed. A door sensor 14 is provided at the door 12. The door sensor 14 is connected to a compressor (not shown) that operates a blasting unit 50 such that the blasting unit will not operate when the door 12 is not properly sealed. The door sensor 14 also generates an audible warning to indicate to the user that the door 12 is not properly sealed. The blasting unit 50 is mounted on a side wall 16 of the chamber, and is located behind the refrigeration unit 100 in Fig. 1.

The blasting unit 50 extends into the first chamber 10 via an aperture provided in the side wall 16 of the first chamber 10, as can be seen in Fig. 2. The blasting unit 50 has an elongate barrel 52 terminating in a nozzle 54. A rubber seal 56 ensures an airtight fitting at the aperture 15 of the chamber wall 16. The blasting unit 50 is pneumatically operated by a compressor (not shown) and a trigger 58 is provided to initiate blasting.

When operated, the blasting unit 50 fires blast material provided in a collector 60 towards the refrigeration unit 100. The blast material is typically glass, sand or metal filings. The blasting unit 50 is capable of being moved in directions 'A' and 'B' so that the aim of the blasting unit 50 may be adjusted. The blasting unit 50 may also be moved in a direction normal to direction 'A'. A viewing window 18 is provided at the wall 16 of the first chamber 10 so that the user may aim the blasting unit 50.

The linings of the refrigeration unit 100 that has been placed within first chamber 10 have been removed so that a medium, typically in the form of polyurethane foam, is exposed. This medium contains toxic compounds, such as CFC. Firing blast material at the refrigeration units 100 agitates the foam causing it to become separated from the refrigeration unit 100. The foam and blasting material fall onto the mesh supporting member 20 and then through the mesh towards the base of the first chamber 10.

A base plate 30 is provided directly beneath the mesh supporting member 20. The base plate 30 is inclined at an angle such that one end of the plate 30 is close to the base of the first chamber 10 at a first location. At the opposite end the base plate is at a higher vertical height and, near to this end, the base plate is connected to the rotating member 32 of a motor 34. The rotating member 32 is offset from the centre of the motor 34 such that operation of the motor 34 causes shaking of the base plate 30. More than one motor may be attached to the base plate 30 to provide shaking in a number of orientations.

The foam and blasting material that falls through the mesh lands on the base plate 30. Due to the slope of the base plate 30 and the shaking provided by the motor 34, the foam and blast material will tend to move down the slope towards the first location of the first chamber 10. The blast material, which is heavier than the foam, will tend to fall into the collector 60. The blast material is supported within the collector 60 on a fine mesh filter 62. Any blast material that has become fragmented with tend to travel to the bottom of the collector 60 and then fall through the filter 62 into a basin 64 provided beneath the collector 60.

Extraction means 71 for extracting the foam from the first chamber is provided. The extraction means 71 includes two inlets within the first chamber 10 connected to ducting 73. A first inlet 70 is provided at the first location of the first chamber 10. A mesh guard 72 is placed in front of the first inlet 70 to inhibit blast material falling into the inlet 70. The extraction means tends to draw the lighter foam into the first inlet 70 as it moves down the base plate 30 towards the first location.
A second inlet 74 is provided near the top of the first chamber 10. This inlet tends to extract small pieces of foam that the turbulence of operation of the blasting unit 50 has caused to be airborne.

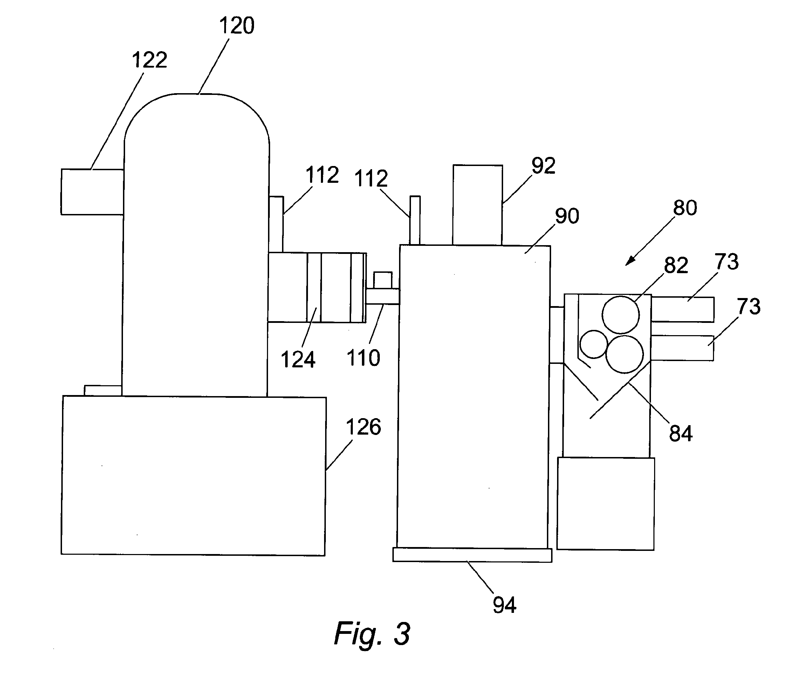

Referring to Fig. 3, the extraction means draws the foam (via the ducting 73) into milling means that comprises a milling apparatus 80 having a number of rotating milling wheels 82. These milling wheels 82 break up the foam into smaller pieces as it travels from the first chamber 10. The flow path within the milling apparatus 80 also forces the pieces of foam to head downwards and then upwards into a second chamber 90. The milling apparatus 80 also includes sorting means in the form of a trap 84. Any heavier blast material that has been extracted along with the foam will tend to fall into the trap 84 of the milling apparatus 80.

Air disturbing means in the form of a cyclo-generator motor 92 is provided near the top of the second chamber 90. This motor 92 creates a cyclone within the second chamber 90 which maintains the foam in an airborne condition. The apparatus includes heating means which includes a heater 94 provided at the base of the second chamber 90. The heating means also applies heat to the base plate 30.

The heater 94 heats the second chamber 90 to a specified temperature. This temperature is typically around 35° C. At this temperature the CFC is released from the polyurethane foam and the CFC gas can then be further extracted as is described below. It should be appreciated that the heater could heat the second chamber 90 to a higher temperature, such as greater than 280°C. At such a temperature the CFC gas is released and then destroyed. It is undesirable to raise the temperature too far as the polyurethane foam could ignite.

An outlet of the second chamber 90 is provided near to the top of the chamber 90, though at a distance from the cyclo-generator motor 92. A valve 110 is provided at the outlet. When the valve is open, CFC gas may flow via the outlet into a third chamber 120. A first pump 122 is provided to draw the air from the second chamber 90 to the third chamber 120. This pump 122 is typically a vacuum pump.

The third chamber 120 is not heated and therefore the CFC gas will cool within the third chamber 120 and tend to convert from a vapour to a liquid form. A charcoal filter 124 is also provided between the second chamber 90 and third chamber 120 which assists in converting the CFC gas from vapour to liquid form.

A second pump 126 is provided near the base of the cooling chamber 120. This pump 126 draws the CFC, in both liquid and vapour form from the third chamber 120. The CFC can be transported to containers (not shown) for later destruction.

Detection means in the form of gas detectors 112 are provided at a number of locations within the apparatus. These detectors 112 are adapted to operate components of the apparatus when the presence of CFC is detected. Activation of the detector 112 in the first chamber 10 can be used to prevent opening of the door 12. The detector 112 in the second chamber opens the valve 110 to allow the gas to flow from the second chamber 90 to the third chamber 130. The detector 112 within the third chamber 120 initiates operation of the second pump 126 to draw the CFC from the third chamber 120 to the containers for disposal.

A method according to the present invention will now be described.

Each refrigeration unit 100 is first stripped of all components that are not in contact with the foam. The linings of the unit 100 are removed to expose the foam.

The user places at least one refrigeration unit 100 into the first chamber 10 of the apparatus. The door is closed and, providing that the door is properly sealed, the apparatus may now be activated.

A start button (not shown) is depressed and this activates the compressor (not shown) which can deliver up to around 2 MPa of pressure to fire the blasting material, which is preferably glass. The motor 34 for shaking the base plate 30 and the extraction means are also initiated. The user can aim the blasting unit 50 by observing through the viewing window 18. The user then activates the trigger 58 and fires material at the refrigeration unit 100. This causes the foam to separate from the refrigeration unit 100 which then falls through the mesh of the supporting unit 20 and onto the base plate 30. Shaking of the base plate 30 causes the material to move towards a first location of the chamber 10 where it is extracted. The base plate 30 is also heated to release CFC from the foam.

The foam is milled, and sorted from any blast material, before being extracted to a second chamber 90. In this chamber 90 the foam is kept airborne and heated to release CFC. When a detector senses the presence of CFC, the CFC is extracted to a third chamber where it is cooled then drawn into containers for disposal. The apparatus will continue to operate until no CFC is detected.

Various modifications and improvements can be made without departing from the scope of the present invention. For example, the refrigeration unit 100 may be agitated by a compressing plate used to compress the unit 100. The compressing plate may also oscillate to further agitate the unit 100. The toxic compound may be another gas, such as HFC or hydrochlorofluorocarbon (HCFC) or a liquid, such as polychlorinated biphenyl (PCB).

## Claims

1. An apparatus adapted to release toxic compounds from a medium present in one or more appliances (100) comprising:
a first chamber (10) for housing the or each appliance (100),
**characterised in that** the apparatus further comprises:
agitating means adapted to separate the medium containing the toxic compounds from the or each appliance(100); and
heating means for applying heat to the medium to release the toxic compounds.

2. An apparatus as claimed in Claim 1, wherein the agitating means comprises a blasting unit (50) adapted to direct blast material at a high velocity towards the appliance (100).

3. An apparatus as claimed in Claim 2, wherein a user may adjust the aim of the blasting unit (50) so that blast material may be directed at different locations of the appliance (100).

4. An apparatus as claimed in any preceding claim, wherein the apparatus includes a mesh supporting member (20) for supporting the or each appliance (100) within the first chamber (10), and which allows blast material to fall through the mesh.

5. An apparatus as claimed in Claim 4, wherein the apparatus includes an inclined base plate (30) positioned below the mesh supporting member (20) so that blast material falling through the mesh will fall onto the base plate (30) and then tend to move down the slope of the base plate (30) towards a first location within the first chamber (10).

6. An apparatus as claimed in Claim 5, wherein the heating means is adapted to heat the base plate (30).

7. An apparatus as claimed in Claim 5 or 6, wherein a collector (60) is provided proximal to the first location of the first chamber (10) for collecting the blast material, and wherein the collector (60) comprises a mesh filter (62) adapted to allow fragmented blast material to fall through the mesh.

8. An apparatus as claimed in any preceding claim, wherein the apparatus comprises a second chamber (90) and extraction means adapted to transport the medium from the first chamber (10) to the second chamber (90).

9. An apparatus as claimed in Claim 8, wherein the second chamber (90) includes air disturbing means adapted to maintain the medium in an airborne condition.

10. An apparatus as claimed in Claim 9, wherein the air disturbing means comprises a cyclo-generator motor (92).

11. An apparatus as claimed in any of Claims 8 to 10, wherein the heating means is adapted to heat the second chamber (90) to a first specified temperature such that the toxic compound is released from the medium.

12. An apparatus as claimed in any of Claims 8 to 11, wherein the second chamber (90) is heated to a second specified temperature such that the toxic compound is released from the medium and then destroyed.

13. An apparatus as claimed in any preceding claim, further comprising milling means (80) to mill the medium.

14. An apparatus as claimed in any of Claims 8 to 13, further comprising a third chamber (120) fluidly connected to the second chamber (90), and wherein a first pump (122) is provided to draw air and toxic compounds from the second chamber (90) to the third chamber (120).

15. An apparatus as claimed in Claim 14, further comprising cooling means adapted to cool the contents of the third chamber (120).

16. An apparatus as claimed in Claim 14 or 15, further comprising filter means (124) for converting the toxic compound from a vapour to a liquid form.

17. An apparatus as claimed in any of Claims 8 to 10, wherein the apparatus includes detection means (112) to detect the presence of the toxic compound, and wherein the detection means (112) is adapted to operate the first pump (122) when the presence of the toxic compound is detected.

18. A method of releasing toxic compounds from a medium present in one or more appliances (100) comprising the step of:
inserting one or more appliances (100) in a chamber (10),
**characterised in that** the method further comprises the steps of:
agitating the or each appliance (100) to separate the medium containing the toxic compounds from the or each appliance (100); and
applying heat to the medium to release the toxic compounds.
